# DEMANDE DE BREVET EUROPEEN

(11) **EP 2 554 819 A1**
(43) Date de publication de la demande: **06.02.2013**
(21) Numéro de dépôt: 12173561.7
(22) Date de dépôt: 26.06.2012
(51) Int. Cl.: F02B 21/00, F01N 5/02, F02G 5/02

(54) **Moteur hybride pneumatique-thermique**

(30) Priorité: 01.08.2011 FR 1157033
(71) Demandeur: PEUGEOT CITROËN AUTOMOBILES SA, 78140 Velizy-Villacoublay (FR)
(72) Inventeur: Le Lievre, Armel, 78360 MONTESSON (FR)

(57) **Abrégé**

L'invention a pour objet un moteur hybride pneumatique-thermique (M') dont au moins une chambre de combustion est reliée à au moins un réservoir (8) de stockage de gaz sous pression. Le réservoir et/ou la chambre de combustion est alimenté(e) en gaz sous pression au moins pour partie par un compresseur de gaz (15) entraîné par l'expanseur (12) d'une boucle de Rankine couplée thermiquement à la ligne d'échappement (9) dudit moteur.

## Description

La présente invention se rapporte à un moteur hybride pneumatique-thermique. Elle se rapporte plus particulièrement, sans s'y limiter, à l'utilisation de ce type de moteur dans le domaine automobile, pour les véhicules de transport de passagers individuels ou collectifs, ou de transport de fret ... C'est donc en référence à cette application que les explications suivantes seront données, bien que l'invention ne s'y limite pas.

On désigne sous l'appellation de moteurs hybrides pneumatiques-thermiques les moteurs à combustion interne, essence ou diesel, qui utilisent le couple résistif en entrée du groupe motopropulseur lors des phases de freinage/décélération pour stocker de l'énergie sous forme pneumatique, qui permettra au moteur de fonctionner hors de ces phases de freinage au moins en partie par la seule force motrice pneumatique ainsi stockée. Concrètement, il s'agit d'air comprimé, issu de la chambre de combustion par le mouvement inertiel des pistons lors des freinages, qui est stockée dans un réservoir pour ensuite être réinjecté dans la chambre de combustion quand le moteur sort de ses phases de freinage, notamment lors des phases d'accélération et de roulage à faible vitesse, pour produire un couple positif, et ainsi permettre au véhicule de rouler sur une certaine distance uniquement grâce à cet air comprimé injecté, sans consommer de carburant. Le pilotage du stockage de l'air comprimé de la chambre de combustion vers un réservoir puis de sa restitution du réservoir directement dans la chambre de combustion se fait par commande de soupapes dites de charge-décharge dédiées à cette fonction, disposées sur un ou plusieurs des cylindres du moteur. Un mode de réalisation de ce concept est connu par exemple du document FR-2 865 769.

On a ainsi une alimentation en gaz (comburant) de la chambre de combustion qui est mixte, et qui provient,
- soit du circuit d'admission d'air extérieur usuel des moteurs à combustion interne, en vu de brûler du carburant du type essence ou diesel, pour faire fonctionner le moteur en mode combustion,
- soit sous forme d'air comprimé provenant du réservoir évoqué plus haut, air comprimé qui a été stocké et qui est réinjecté pour faire fonctionner le moteur en mode pneumatique, la seule pression de l'air comprimé servant de force motrice, par exemple lors des redémarrages en mode « stop and start », sans recourir à des équipements électriques.

Ce type de moteur accepte ainsi au minimum trois modes de fonctionnement :
- le mode thermique : il convertit l'énergie contenue dans le carburant en travail mécanique
- le mode pompe : il convertit l'énergie mécanique (couple, régime) en énergie thermodynamique (pression, température) que l'on nommera énergie pneumatique, et
- le mode pneumatique : il convertit l'énergie pneumatique en travail mécanique. La gestion des modes est assurée par un calculateur qui interprète la demande conducteur et la converti en commandes pour les différents actionneurs.

Cependant, la quantité d'air comprimé qu'on peut stocker ainsi dans un réservoir est limitée, car elle est fonction de la durée des décélérations. Elle est particulièrement réduite dans certaines conditions de roulage stabilisées, sur autoroutes par exemple.

L'invention a alors pour but d'augmenter le rendement énergétique global de ce type de moteur hybride pneumatique-thermique. Accessoirement, elle cherche à atteindre ce but en limitant au mieux toute complexification dans la fabrication ou la mise en oeuvre de ce type de moteur.

L'invention a tout d'abord pour objet un moteur hybride pneumatique-thermique dont au moins une chambre de combustion est reliée à au moins un réservoir de stockage de gaz sous pression. Ce réservoir et/ou cette chambre de combustion est alimenté(e) en gaz sous pression au moins pour partie par un compresseur de gaz entraîné par l'expanseur d'une boucle de Rankine couplée thermiquement à la ligne d'échappement dudit moteur.

Il était déjà connu de valoriser l'énergie thermique des gaz d'échappement, notamment en la convertissant en énergie électrique dans un élément de stockage tampon de type batterie électrique. En effet, dans la mesure où les variations de charge du moteur sont fréquentes avec une périodicité courte, la production d'énergie provenant de la récupération d'énergie thermique des gaz d'échappement n'étant pas en phase avec la demande de puissance du conducteur du véhicule, en raison, principalement, de l'inertie du processus de récupération et de conversion de l'énergie thermique des gaz d'échappement.

Avec l'invention, on ne convertit plus l'énergie thermique des gaz d'échappement en énergie électrique, mais en énergie pneumatique, et on exploite les organes préexistants des moteurs hybrides pneumatiques-thermiques pour la mettre en oeuvre. En effet, le réservoir de stockage de gaz comprimé, nécessaire dans ce type de moteur pour récupérer l'air comprimé des chambres à combustion en phase de freinage, va pouvoir être également avantageusement utilisé pour stocker, le cas échéant, l'air comprimé issu de la récupération de l'énergie thermique des gaz d'échappement.

Cette source supplémentaire d'air comprimé améliore très sensiblement les performances d'un moteur hybride pneumatique-thermique, car il devient possible de faire passer le moteur en mode de fonctionnement pneumatique sur des périodes plus longues et/ou au-delà des périodes de redémarrage, le mode pneumatique devenant envisageable même avec des conditions de roulage stabilisées. Elle est ainsi complémentaire de la source de gaz comprimé issue des chambres de combustion elles-mêmes des moteurs hybrides pneumatiques-thermiques. Par ailleurs, la récupération d'énergie thermique par une boucle de Rankine est un procédé maîtrisé et efficace pour épuiser thermiquement au maximum les gaz d'échappement.

Tout concourt ainsi, par l'invention, à améliorer significativement le rendement énergétique global de ce type de moteur. A noter également que cette augmentation de rendement s'accompagne d'une meilleure maîtrise de consommation de carburant, et, donc, d'une diminution des émissions de gaz de type CO₂ du moteur.

De préférence, l'alimentation en gaz sous pression du réservoir est réalisée, en dehors des phases de décélération du moteur, majoritairement par le compresseur. Comme mentionné plus haut, en effet, le gaz sous pression provenant des chambres de combustion ne vient alimenter ce réservoir, par conception, que lors des phases de décélération/freinage, celui produit grâce à la boucle de Rankine venant alimenter le réservoir aussi dans les autres phases de fonctionnement du moteur.

De préférence, l'alimentation en gaz sous pression du réservoir est réalisée au moins partiellement par la chambre de combustion elle-même lors des phases de décélération du moteur, ce qui n'exclut pas, en parallèle, une alimentation du réservoir également par l'air comprimé produit grâce à la boucle de Rankine. (Il fait tenir compte de l'inertie, évoquée plus haut, dans le processus de conversion de l'énergie thermique en énergie pneumatique).

Selon l'invention, la (ou les) chambre(s) de combustion est(sont) définie(s) par une culasse et un cylindre accueillant un piston, du gaz sous pression étant apte à être dirigé depuis la chambre de combustion vers le réservoir lors des phases de décélération, et depuis le réservoir vers la chambre de combustion en dehors de ces phases par commande d'une soupape. Le moteur comportant généralement plusieurs chambres de combustion, chacune peut être équipée d'une telle soupape et être susceptible d'alimenter le réservoir, ou seulement certaines d'entre elles, voire une seule. En outre, il est possible que toutes les chambres alimentent (et soient alimentées par) le réservoir alternativement.

La boucle de Rankine utilisée dans le cadre de l'invention comprend une boucle de fluide qui comporte : - au moins un évaporateur apte à être couplé thermiquement avec les gaz d'échappement, du type échangeur thermique, - au moins un expanseur (appelé aussi moyen de détente), - au moins un condenseur.

Elle peut comprendre également une pompe entre le condenseur et l'évaporateur.

De préférence, l'expanseur de la boucle de Rankine et le compresseur sont liés mécaniquement, notamment par un arbre transmettant l'énergie mécanique suffisante de l'expanseur au compresseur pour délivrer du gaz au réservoir ou à la chambre de combustion. On peut aussi prévoir tout autre moyen, mécanique ou autre, pour que l'expanseur transmette son énergie et active ainsi le compresseur.

De préférence, le compresseur et le réservoir sont reliés par un conduit muni d'un clapet anti-retour. Ce clapet, ou tout autre moyen mécanique ou pneumatique équivalent, permet de garantir un cheminement uni-sens du gaz sous pression du compresseur au réservoir.

De préférence, le compresseur est un compresseur à spirales, encore connu sous le terme de compresseur « scroll » en anglais. Bien sûr, d'autres types de compresseur sont utilisables de façon équivalente.

L'invention a également pour objet un procédé de gestion d'alimentation en gaz comburant du moteur hybride pneumatique-thermique tel que décrit plus haut, le gaz sous pression provenant du compresseur alimentant sélectivement le réservoir ou la chambre de combustion par commande de soupape(s) de décharge.

L'invention a également pour objet un procédé de gestion d'alimentation en gaz comburant du moteur hybride pneumatique-thermique tel que décrit plus haut, où l'on alimente en gaz la chambre de combustion par du gaz provenant d'un circuit d'admission d'air pour un fonctionnement du moteur en mode thermique et/ou provenant du réservoir de gaz sous pression pour un fonctionnement du moteur en mode pneumatique, par commande sélective de soupapes d'admission d'air et de soupapes de charge-décharge.

L'invention a également pour objet l'association du moteur selon l'une des revendications précédentes avec sa ligne d'échappement, la ligne d'échappement étant couplée thermiquement à une boucle de fluide de Rankine dont l'expanseur entraîne un compresseur de gaz venant alimenter en gaz sous pression au moins une chambre de combustion dudit moteur et/ou un réservoir de gaz sous pression reliée à ladite chambre de combustion.

L'invention a également pour objet un véhicule, notamment automobile, comprenant l'association du moteur et de sa ligne d'échappement telle que décrite plus haut.

L'invention a également pour objet un tel véhicule, où le condenseur de la boucle de Rankine sert de récupérateur d'énergie pour modifier la température de l'habitacle. On vient épuiser l'énergie thermique encore disponible au niveau du condenseur pour chauffer l'habitacle, sans consommation supplémentaire d'énergie ou de carburant

D'autres particularités et avantages apparaîtront à la lecture de la description ci-après d'un mode particulier de réalisation, non limitatif de l'invention, faite en référence aux figures très schématiques suivantes :
- La figure 1 représente un schéma de principe d'un moteur hybride pneumatique selon l'art antérieur,
- La figure 2 représente un schéma de principe d'un mode de réalisation d'un moteur hybride pneumatique selon l'invention.

Ces figures sont extrêmement simplifiées pour en simplifier la compréhension, les éléments représentés ne sont donc pas nécessairement à l'échelle. Chaque référence conserve la même signification d'une figure à l'autre.

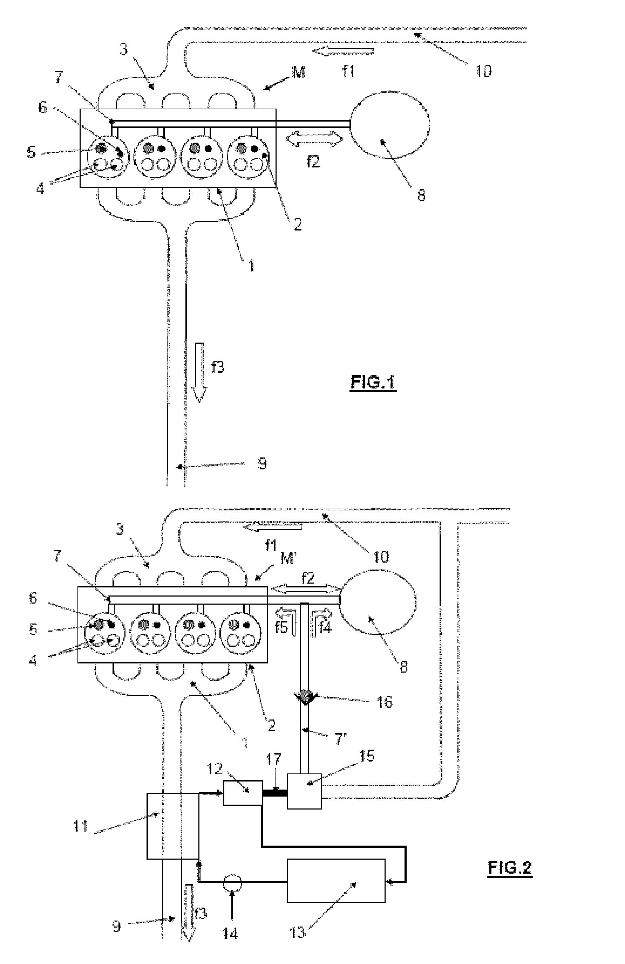

La figure 1 représente un moteur hybride pneumatique-thermique connu. Il comporte de façon classique un bloc moteur M comprenant une culasse 1 et quatre cylindres 2. Chaque cylindre comporte dans le cas ici représenté une soupape d'admission d'air 5 alimentée en air par un circuit d'admission d'air usuel selon la flèche f1, deux soupapes d'échappement 4, et une soupape de charge et décharge 6 d'air comprimé. Les soupapes d'admission 5 et d'échappement 4 coopèrent avec un dispositif de distribution, par exemple par arbres à cames, (non représenté) qui permet l'ouverture et la fermeture de ces soupapes en fonction de la position du piston (non représenté) dans le cylindre 2. La soupape de charge et décharge 6 d'air comprimé coopère avec un dispositif de distribution propre, non représenté, qui permet son ouverture et sa fermeture en fonction des besoins de charge et de décharge de gaz sous pression, besoins qui ne dépendent pas essentiellement de la position du piston dans le cylindre 2. Le moteur comprend encore un répartiteur d'air d'admission 3 permettant la distribution d'air d'admission dans les cylindres 2 par l'intermédiaire des soupapes d'admission 5, un collecteur d'échappement 1 permettant l'évacuation des gaz d'échappement des cylindres 2 par l'intermédiaire de la soupape d'échappement 4 vers la ligne d'échappement 9 selon la direction de la flèche f3.

Le moteur comporte aussi des moyens de stockage en gaz sous pression sous forme d'un réservoir 8 de stockage de gaz sous pression, et un réseau 7 de conduites (une conduite principale et des conduites dérivées pour chacun des cylindres) reliant le réservoir 8 de stockage de gaz sous pression aux cylindres 2 au niveau de leur soupape 6 de charge et de décharge de gaz sous pression. La flèche f2 indique que l'air comprimé vient alimenter le réservoir 8 à partir des chambres de combustion pendant les phases de freinage, en mode de fonctionnement thermique, et que l'air comprimé prend le chemin inverse quand le moteur passe en mode de fonctionnement pneumatique, lors des redémarrages notamment.

Avec ce type de moteur, la compression est faite en utilisant les cylindres 2, la pression maximale dans le réservoir 8 dépend directement du taux de compression du moteur. Par exemple, pour un moteur essence avec un taux de compression de 11, la pression maximum atteinte dans le réservoir sera de l'ordre de 20 bars. Au-delà de cette pression, le moteur en mode pompe pneumatique, c'est à dire de récupération d'énergie par compression d'air, ne sera plus en mesure de chasser l'air vers le réservoir d'air comprimé.

A ces niveaux de pression et pour des volumes de réservoir compatibles pour une application automobile du type véhicule léger, par exemple inférieurs à 50 litres, la capacité de stockage est de l'ordre de grandeur de l'énergie cinétique disponible sur un petit freinage (30 km/h à 0 km/h). La quantité d'énergie stockée étant relativement faible, il s'agit ici de récupérer et d'utiliser l'énergie dans des temps courts. Cette technologie repose sur la réactivité et la capacité du système à passer rapidement d'un mode moteur thermique à un mode pompe pneumatique ou d'un mode moteur pneumatique à un mode moteur thermique.

La figure 2 présente un exemple de réalisation d'un moteur hybride pneumatique-thermique conforme à l'invention. Ne seront décrits ici que les composants ajoutés par rapport à ceux déjà présents dans la figure 1. En effet, ce moteur M' reste, pour la plupart de ses composants, identique au moteur M connu. Mais ici, le circuit d'air comprimé destiné à alimenter les chambres de combustion en mode de fonctionnement pneumatique du moteur M' est complété par une nouvelle source d'air comprimé obtenue par conversion de l'énergie thermique récupérée des gaz d'échappement de la ligne d'échappement 9.

Selon l'invention, on a adjoint à la ligne d'échappement une boucle de fluide (le fluide est ici de l'eau) de Rankine. Cette boucle comprend un évaporateur 11 couplé thermiquement avec les gaz d'échappement, du type échangeur thermique. On ne rentrera pas ici dans les détails de conception de l'échangeur thermique, connue en soi. Sous l'effet de la chaleur des gaz d'échappement, l'eau contenue dans l'évaporateur se vaporise, et la vapeur à haute pression ainsi obtenue est conduite dans un expanseur 12, appelé aussi moyen de détente. Cet expanseur actionne via une liaison mécanique sous forme d'un arbre 17 un compresseur à spirales 15, qui va ensuite agir sur le moteur comme décrit ultérieurement. Continuons à décrire la boucle de Rankine : en sortie de l'expanseur 12, on récupère de la vapeur basse pression, qui vient alimenter un condenseur 13. En sortie du condenseur, on récupère de l'eau liquide, qui est ensuite amorcée à l'aide d'une pompe à eau 14 pour alimenter l'évaporateur 11, le fluide bouclant ainsi sa boucle. (Le principe d'une boucle thermodynamique de Rankine est connu et ne sera donc pas davantage décrit). A noter que, de préférence, on dispose l'évaporateur 11 sur la ligne d'échappement 9 en aval des systèmes de dépollution (en utilisant le terme « aval » en référence au sens d'écoulement des gaz d'échappement issus du moteur dans la ligne). En effet, quand ces systèmes de dépollution impliquent des réactions exothermiques dans la ligne, l'évaporateur peut ainsi récupérer au moins en partie cet apport de chaleur.

Si on revient maintenant au compresseur 15, on a vu que celui-ci, de type à spirales, est entraîné par l'arbre 17 mu sous l'effet de la vapeur de l'expanseur. Le compresseur produit de l'air comprimé, qui peut, via une conduite 7' munie d'un clapet anti-retour 16 rejoignant la conduite principale 7, alimenter soit le réservoir 8 (flèche f4) pour être stocké provisoirement, quand le moteur est en mode thermique, soit directement les chambres de combustion (flèche f5) afin que le moteur passe en mode pneumatique. Le cheminement de l'air comprimé en sortie du compresseur est commandé, notamment, par pilotage des soupapes 6 de charge-décharge, et, éventuellement par des vannes ou tout autre moyen apte à contrôler la circulation d'air comprimé provenant du compresseur 15 dans les conduites 7 et 7' jusque dans les chambres de combustion ou le réservoir 8. Ce pilotage peut aussi avoir recours à tout dispositif mécanique, hydraulique ou pneumatique.

Le réservoir 8 a été maintenu inchangé dans ses caractéristiques par rapport à celui utilisé dans les moteurs hybrides conventionnels comme celui représenté en figure 1. Il est également possible d'en adapter les dimensions, notamment d'en augmenter raisonnablement la taille, puisque le moteur selon l'invention autorise un stockage plus important de gaz sous pression dans le réservoir en ajoutant une source supplémentaire. On peut aussi en adapter la forme pour optimiser l'encombrement global du moteur avec ce réservoir.

Il est à noter que l'air comprimé stocké dans le réservoir, qu'il provienne de la chambre de combustion ou du compresseur, peut aussi être réinjecté dans la chambre de combustion en dehors du mode de fonctionnement pneumatique, mais également en mode de fonctionnement thermique pour suralimenter le moteur, ce qui permet d'en augmenter la puissance ou d'en améliorer le rendement. Cet air de suralimentation peut aussi être injecté directement du compresseur vers la chambre de combustion sans stockage provisoire dans le réservoir.

Il est également à noter que l'invention peut s'appliquer aussi bien aux moteurs à injection directe qu'aux moteurs à injection indirecte, l'injection directe permettant cependant de gérer plus facilement la richesse du mélange air/essence en mode thermique.

L'invention améliore ainsi le rendement des moteurs hybrides pneumatiques-thermiques, sans modifications majeures dans la conception de ces moteurs : elle ne fait qu'utiliser ou compléter les systèmes de tuyauteries existantes pour faire circuler l'air comprimé, elle utilise un réservoir d'air comprimé qui existe déjà, un système de distribution de l'air comprimé avec une gestion par des soupapes dédiées qui existe également déjà dans ce type de moteur.

## Revendications

1. Moteur hybride pneumatique-thermique (M') dont au moins une chambre de combustion est reliée à au moins un réservoir (8) de stockage de gaz sous pression, **caractérisé en ce que** ledit réservoir et/ou ladite chambre de combustion est alimenté(e) en gaz sous pression au moins pour partie par un compresseur de gaz (15) entraîné par l'expanseur (12) d'une boucle de Rankine couplée thermiquement à la ligne d'échappement (9) dudit moteur.

2. Moteur (M') selon la revendication précédente, **caractérisé en ce que** l'alimentation en gaz sous pression du réservoir (8) est réalisée, en dehors des phases de décélération du moteur, majoritairement par le compresseur (15).

3. Moteur (M') selon l'une des revendications précédentes, **caractérisé en ce que** l'alimentation en gaz sous pression du réservoir (8) est réalisée au moins partiellement par la chambre de combustion elle-même lors des phases de décélération du moteur.

4. Moteur (M') selon l'une des revendications précédentes, **caractérisé en ce que** la chambre de combustion est définie par une culasse (1) et un cylindre (2) accueillant un piston, du gaz sous pression étant apte à être dirigé depuis la chambre de combustion vers le réservoir (8) lors des phases de décélération, et depuis le réservoir vers la chambre de combustion en dehors de ces phases par commande d'une soupape (6).

5. Moteur (M') selon l'une des revendications précédentes, **caractérisé en ce que** la boucle de Rankine comprend une boucle de fluide qui comporte : - au moins un évaporateur (11) apte à être couplé thermiquement avec les gaz d'échappement, du type échangeur thermique, - au moins un expanseur (12), - au moins un condenseur (13).

6. Moteur (M') selon la revendication précédente, **caractérisé en ce que** la boucle de Rankine comprend également une pompe (14) entre l'évaporateur (11) et le condenseur (13).

7. Moteur (M') selon l'une des revendications précédentes, **caractérisé en ce que** l'expanseur (12) de la boucle de Rankine et le compresseur (15) sont liés mécaniquement, notamment par un arbre (17) transmettant l'énergie suffisante de l'expanseur au compresseur pour délivrer du gaz au réservoir (8) ou à la chambre de combustion.

8. Association du moteur (M') selon l'une des revendications précédentes avec sa ligne d'échappement (9), la ligne d'échappement étant couplée thermiquement à une boucle de fluide de Rankine dont l'expanseur (12) entraîne un compresseur de gaz (15) venant alimenter en gaz sous pression au moins une chambre de combustion dudit moteur et/ou un réservoir (8) de gaz sous pression reliée à ladite chambre de combustion.

9. Procédé de gestion d'alimentation en gaz comburant du moteur (M') hybride pneumatique-thermique selon l'une des revendications 1 à 7, **caractérisé en ce que** le gaz sous pression provenant du compresseur (15) alimente sélectivement le réservoir (8) ou la chambre de combustion par commande de soupape(s) de décharge (6).

10. Procédé de gestion de l'alimentation en gaz du moteur (M') selon l'une des revendications 1 à 7, **caractérisé en ce qu'**on alimente en gaz la chambre de combustion par du gaz provenant d'un circuit d'admission d'air pour un fonctionnement du moteur en mode thermique et/ou du réservoir de gaz sous pression pour un fonctionnement du moteur en mode pneumatique, par commande sélective de soupapes d'admission d'air (5) et de soupapes de charge-décharge (6).

11. Véhicule, notamment automobile, comprenant l'association du moteur (M') et de sa ligne d'échappement (9) selon la revendication 8.
